**Europäisches Patentamt**

**European Patent Office**

**Office européen des brevets**

(19)

(11) Veröffentlichungsnummer: **0 045 442**
**B1**

(12) **EUROPÄISCHE PATENTSCHRIFT**

(45) Veröffentlichungstag der Patentschrift:
**10.04.85**

(51) Int. Cl.⁴: **H 02 M 5/00**

(21) Anmeldenummer: **81105795.9**

(22) Anmeldetag: **22.07.81**

(54) Umrichter mit mehrphasigem Ausgang und jeweils einem eigenen Stromregler für jeden Ausgang.

(30) Priorität: **01.08.80 DE 3029320**

(43) Veröffentlichungstag der Anmeldung:
**10.02.82 Patentblatt 82/6**

(45) Bekanntmachung des Hinweises auf die Patenterteilung:
**10.04.85 Patentblatt 85/15**

(84) Benannte Vertragsstaaten:
**AT CH DE LI SE**

(56) Entgegenhaltungen:
**FR - A - 2 105 055**

(73) Patentinhaber: **Siemens Aktiengesellschaft, Berlin und München Wittelsbacherplatz 2, D-8000 München 2 (DE)**

(72) Erfinder: **Salzmann, Theodor, Dipl.-Ing., Leimbergerstrasse 29, D-8520 Erlangen (DE)**

ACTORUM AG

## Beschreibung

Die Erfindung betrifft eine Schaltungsanordnung mit einem Umrichter zum Speisen einer m-phasigen Last, wobei der Umrichter aus m Teilumrichtern mit Wechselspannungsausgängen besteht, jeweils der eine Ausgang jedes Teilumrichters zu einem gemeinsamen, nicht direkt mit der Last verbundenen Umrichter-Sternpunkt geführt ist, jedem Teilumrichter der Ausgangsstrom durch einen eigenen Stromregler mit I-Anteil eingeprägt ist und jedem Stromregler neben der Sollwert/Istwert-Differenz des Teilumrichter-Ausgangsstromes ein zusätzliches Signal aufgeschaltet ist.

Zum Speisen einer m-phasigen Last werden häufig Umrichter verwendet, die aus m Teilumrichtern bestehen, wobei jeder Teilumrichter zwei Ausgänge (Wechselstromausgänge) besitzt und jeweils einer dieser beiden Ausgänge zu einem gemeinsamen Sternpunkt des Umrichters geführt ist. Für einen stromgeregelten Betrieb des Umrichters ist es dabei vorteilhaft, jedem Teilumrichter den Ausgangsstrom durch einen eigenen Stromregler einzuprägen. Ist der Umrichter-Sternpunkt mit einem Sternpunkt der Last verbunden, so bestimmen die Stromregler die in jedem Umrichterausgang fliessenden Ströme.

Es ist jedoch insbesondere bei der Speisung von elektrischen Maschinen häufig vorteilhaft, den Umrichter-Sternpunkt nicht anzuschliessen, insbesondere nicht mit dem Sternpunkt der Maschine zu verbinden. Dann weist nämlich der Maschinenstrom einen geringeren Oberschwingungsgehalt auf und der Umrichter lässt sich mit trapezförmiger Ausgangsspannung betreiben, was zu einer besseren Ausnutzung von Umrichter und Maschine führt. Eine derartige Schaltungsanordnung ist z. B. in der deutschen Offenlegungsschrift 2 502 513 beschrieben. Da jedoch wegen des Kirchhoff'schen Gesetzes am Umrichter-Sternpunkt die Summe der Ströme stets Null sein muss, sind die Ströme durch die drei Stromregler überbestimmt. Werden nun Stromregler mit integralem Anteil verwendet, so können die Ausgangsspannungen der Stromregler auseinanderlaufen, so dass der Umrichter-Sternpunkt elektrisch nicht mehr in der Mitte der Ausgangsphasen liegt. Es entsteht dann ein unsymmetrisches Spannungssystem. Daher wird entsprechend der erwähnten Offenlegungsschrift 2 502 513 auf die Sollwerte aller m-Stromregler ein gemeinsames zusätzliches Signal als Zusatzsollwert aufgeschaltet, der aus der Spannungsdifferenz zwischen dem Umrichter-Sternpunkt und dem Last-Sternpunkt abgeleitet ist und diese Spannungsdifferenz zu Null regelt. Dies erfordert jedoch jeweils ein Spannungsmessglied am Umrichter-Sternpunkt und am Maschinen-Sternpunkt, was insbesondere bei Hochspannungsanlagen für mehr als 1000 V einen erheblichen Aufwand bedeutet. Ist der Last-Sternpunkt unzugänglich, so ist ferner über Belastungswiderstände ein künstlicher Sternpunkt erst zu schaffen.

Der Erfindung liegt die Aufgabe zugrunde, die eingangs genannte Schaltungsanordnung zu vereinfachen.

Dies geschieht dadurch, dass das zusätzliche Signal jedes Stromreglers jeweils über einen Widerstand an seinem Ausgang abgegriffen ist. Jeder einzelne Stromregler wird also durch eine zusätzliche ohmsche Rückführung ergänzt, die ein Wegdriften der Regler verhindert. Wählt man also Stromsollwerte für die einzelnen Stromregler, deren Summe gleich Null ist, so wird dadurch zumindest im zeitlichen Mittel verhindert, dass durch ein Wegdriften der Regler die einzelnen Ausgangsspannungen auseinanderlaufen.

In der Regel sind als Stromregler PI-Regler eingesetzt. Der gemäss der Erfindung vorgesehene Widerstand in der zusätzlichen Rückführung ist höherohmig gewählt als in der ursprünglichen P-Rückführung. Vorteilhaft beträgt das Verhältnis des zusätzlichen Widerstandes zu dem Verhältnis in der P-Rückführung des PI-Reglers mindestens drei, vorzugsweise etwa fünf. Dadurch werden die dynamischen Eigenschaften des Reglers praktisch nicht beeinflusst, es stellt sich lediglich ein stationärer Regelfehler ein, der jedoch nur eine geringe Abweichung von etwa 1–2% zwischen Sollwert und Istwert beträgt. Dies ist vor allem bei Antriebsregelungen, bei denen die Amplitude der Stromsollwerte von einem überlagerten Drehzahlregler abgeleitet ist, bedeutungslos.

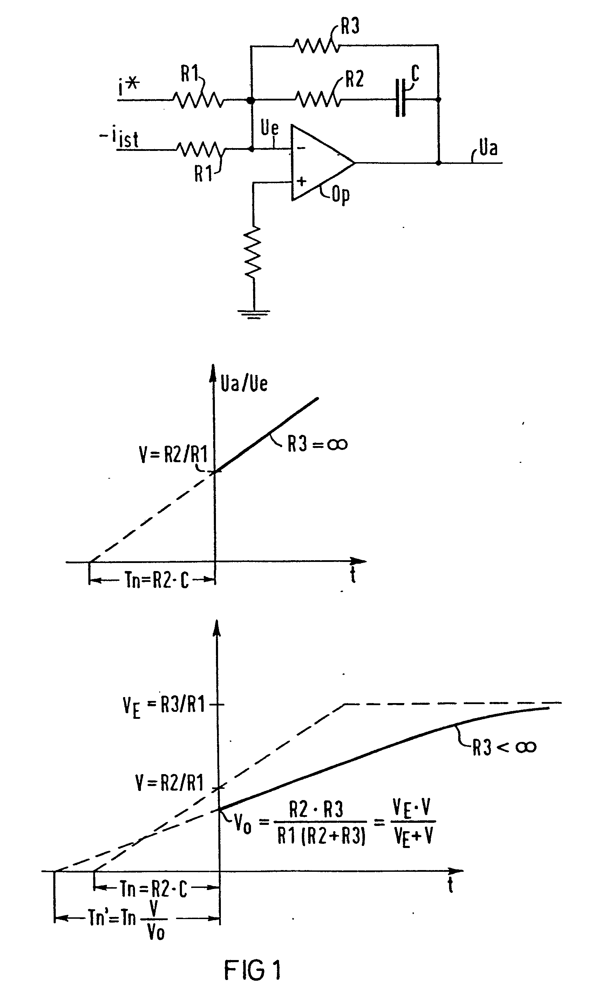

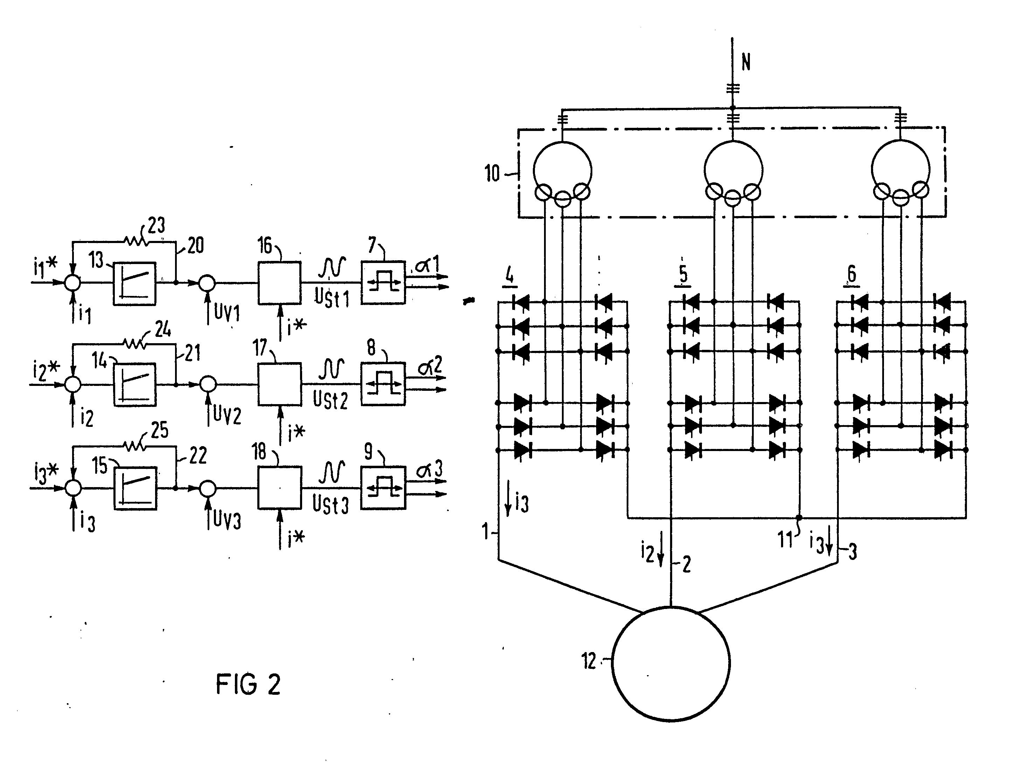

Anhand zweier Figuren und eines Ausführungsbeispieles wird die Erfindung näher erläutert. Figur 1 zeigt die Struktur des Reglers sowie das Reglerausgangssignal («Sprungantwort») bei einer sprunghaften Änderung des Reglereingangssignals, jeweils für den Fall, dass der gemäss der Erfindung vorgesehene Widerstand unendlich ist (d. h. die Rückführungsleitung fehlt wie beim Stand der Technik) oder endlich ist. Figur 2 zeigt eine Schaltungsanordnung gemäss der Erfindung zur Speisung einer dreiphasigen Drehfeldmaschine.

Bei der Schaltung nach Figur 1 ist für jeden der erfindungsgemäss verwendeten Regler ein Operationsverstärker Op vorgesehen, dem über Widerstände, deren Widerstandswert mit R1 angegeben ist, die Differenz zwischen dem Sollwert $i^*$ und dem Istwert $i_{ist}$ für den Ausgangsstrom desjenigen Teilumrichters zugeführt ist, dem der betreffende Regler zugeordnet ist. Eine Reihenschaltung aus einer Kapazität C und einem Rückführwiderstand R2 sorgt für das PI-Verhalten des Reglers. Gemäss der Erfindung ist eine weitere Rückführungsleitung mit einem Widerstand R3 vorgesehen.

Der Fall R3 = ∞ entspricht einem üblichen PI-Regler, bei dem die entsprechende Rückführungsleitung 5 mit dem Widerstand R3 fehlt. In diesem Fall ist die Verstärkung V durch den Quotienten R2/R1 und die Zeitkonstante $T_n$ durch das Produkt R2 · C gegeben. Somit ergibt sich als Antwort auf eine sprungartige Änderung der Eingangsgrösse $i^* - i_{ist}$ der in Figur 1 dargestellte Verlauf («Sprungantwort») der Ausgangsspannung.

Gemäss der Erfindung ist jedoch der Widerstand R3 endlich. Hierfür ergibt sich der in Figur 1 mit «R3 < ∞» gekennzeichnete Verlauf der Ausgangsspannung, deren Verstärkung von einem Wert $[R3 \cdot R2] : [R1 \cdot (R2 + R3)]$ zum Zeitpunkt Null ausgehend asymptotisch einen Wert $R3/R1$ annimmt. Die Zeitkonstante ist in diesem Fall gegeben durch $C \cdot (R2 + R3) \cdot R/R3$ oder, mit den Symbolen aus Figur 1 zu $T'_n = T_n \cdot V/V_o \cdot (V_e + V)/V_e$.

Figur 2 zeigt eine Schaltungsanordnung gemäss der Erfindung, mit einem Direktumrichter mit drei Einphasenausgängen 1, 2, 3 zur Speisung einer dreiphasigen Last. Der Direktumrichter besteht aus drei Umkehrstromrichtern 4, 5, 6, deren Ventile von Steuersätzen 7, 8, 9 angesteuert werden. Jeder Eingang jedes Teilumrichters ist über eine getrennte Sekundärwicklung des Transformators 10 an ein speisendes Drehstromnetz N angeschlossen. Vorteilhaft wird ein Direktumrichter mit kreisstromfrei betriebenen Umkehrumrichtern als Teilumrichter verwendet, vorteilhaft kann aber auch ein Pulsumrichter, der aus Teilumrichtern besteht, die von einem Gleichspannungsnetz gespeist werden, verwendet werden. Die Teilumrichter 4, 5, 6 besitzen je zwei Ausgänge (Wechselstromausgänge), von denen jeweils einer auf dem gemeinsamen Umrichter-Sternpunkt 11 geführt ist, der andere an eine Maschinenklemme einer Drehfeldmaschine 12 angeschlossen ist. Der Sternpunkt 11 ist nicht angeschlossen, insbesondere ist keine Verbindung zwischen dem Sternpunkt 11 und der Maschine 12 vorgesehen.

Zur Regelung der Drehfeldmaschine wird für jeden der Wechselstromausgänge 1, 2, 3 ein eigener Strom-Sollwert $i_1^*$, $i_2^*$, $i_3^*$ vorgegeben und zusammen mit den zugehörigen Istwerten $i_1$, $i_2$, $i_3$ jeweils dem Eingang eines dem betreffenden Teilumrichter zugeordneten Reglers 13 bzw. 14 bzw. 15 zugeführt. Jedem Ausgangssignal eines Reglers kann zur Vorsteuerung, wie sie z.B. in den deutschen Offenlegungsschriften 2 657 762 und 2 657 712 beschrieben ist, eine Vorsteuerspannung $U_{v1}$, $U_{v2}$ bzw. $U_{v3}$ aufgeschaltet werden, die der von der Last erzeugten Gegenspannung entspricht. Ferner sind Kommandostufen 16, 17, 18 vorgesehen, die bei Vorzeichenumkehr des jeweiligen Stromsollwertes eine Umschaltung zwischen den antiparallelen Ventilen jedes Stromrichters vornimmt.

Die auf diese Weise erzeugten Steuerspannungen $U_{st1}$, $U_{st2}$, $U_{st3}$ für die Teilumrichter werden den Steuersätzen 7, 8, 9 zugeführt, die die Stromrichter dann mit entsprechenden Steuerwinkeln $\alpha1$, $\alpha2$, $\alpha3$ ansteuern. In der Regel besitzen diese Steuerspannungen einen sinusförmigen Verlauf. Dies entspricht einem symmetrischen System der Ausgangsspannungen, d.h. einer Spannung $U_o =$ o am Umrichter-Sternpunkt 11. Bei einer symmetrischen Last, deren Sternpunkt nicht an den Umrichter-Sternpunkt angeschlossen ist, ist vorteilhaft ein trapezförmiger Verlauf der die Last speisenden Wechselspannungen anzustreben. Gemäss einer vorteilhaften Weiterbildung der Schaltungsanordnung werden die trapezförmigen Ausgangsspannungen dadurch erreicht, dass die sinusförmigen Steuerspannungen (Kurvenverlauf

$U_{st} = U_{sto} \cos\omega T$) Steuersätzen aufgeschaltet werden, die einen linear proportionalen Zusammenhang $\alpha = k \cdot U_{st}$ zwischen Steuerspannung und Steuerwinkel mit der Proportionalitätskonstanten k aufweisen. Da bei netzgeführten Stromrichtern die Ausgangsspannung vom Cosinus des Steuerwinkels abhängt ($U_a = U_{dio} \cdot \cos\alpha$, wobei $U_{dio}$ die «ideelle Leerlaufgleichspannung ist, die der Ausgangsspannung beim Steuerwinkel $\alpha = 0°$ entspricht) ergibt sich dabei für die Ausgangsspannung $U_a$ der Zusammenhang

$$U_a = U_{dio} \cdot \cos\alpha = U_{dio} \cdot \cos(k \cdot U_{st}) = U_{dio} \cdot \cos(k \cdot U_{sto} \cdot \sin\omega T).$$

Dies bedeutet einen annähernd trapezförmigen Kurvenverlauf, wobei die Grundschwingungs-Amplitude der Ausgangsspannung etwa um den Faktor 1,14 gegenüber der Amplitude der Ausgangsspannung $U_a$ erhöht ist, während der Oberschwingungsanteil mit den Ordnungszahlen 5 und 7 kleiner ist als 1,5%. Man erreicht dadurch auf einfache Weise die durch die Trapezform angestrebten Vorteile.

Am Umrichter-Sternpunkt 11 muss wegen des Kirchhoff'schen Gesetzes gelten $i_1 + i_2 + i_3 = 0$. Würden nun nur zwei Regler, z.B. die Regler 13 und 14, für die Regelung von zwei Ausgangsströmen verwendet, so wäre dadurch auch der dritte Ausgangsstrom bestimmt. Da jedoch gemäss der Erfindung auch für den dritten Ausgangsstrom $i_3$ ein eigener Stromregler 15 vorgesehen ist, ist das System überbestimmt. In der Regel besitzen die Regler 13, 14 und 15 jeweils eine eigene Nullpunktdrift, die Regler stören sich daher gegenseitig selbst dann, wenn die Bedingung $i_1^* + i_2^* + i_3^* = 0$ eingehalten wird. Diese Störung wird jedoch dadurch vermieden, dass jedem Regler eine zusätzliche Rückführungsleitung 20, 21, 22 zugeordnet ist, die einen entsprechenden Widerstand 23, 24, 25 enthält. Dadurch wird die Nullpunktdrift jedes Reglers unterdrückt und ein Auseinanderlaufen der Regler vermieden.

**Patentansprüche**

1. Schaltungsanordnung mit einem Umrichter zur Speisung einer m-phasigen Last, wobei der Umrichter aus m Teilumrichtern (4, 5, 6) mit Wechselspannungsausgängen (1, 2, 3) besteht, jeweils der eine Ausgang jedes Teilumrichters zu einem gemeinsamen, nicht direkt mit der Last verbundenen Umrichter-Sternpunkt (11) geführt ist, jedem Teilumrichter der Ausgangsstrom durch einen eigenen Stromregler (13, 14, 15) mit I-Anteil eingeprägt ist und jedem Stromregler neben der Sollwert-Istwertdifferenz des Teilumrichter-Ausgangsstromes ein zusätzliches Signal aufgeschaltet ist, dadurch gekennzeichnet, dass das zusätzliche Signal jedes Stromreglers (13, 14, 15) jeweils über einen Widerstand (23, 24, 25) an seinem Ausgang abgegriffen ist.

2. Schaltungsanordnung nach Anspruch 1, dadurch gekennzeichnet, dass als Stromregler PI-Regler (13, 14, 15) verwendet sind und das Verhältnis des Widerstandes zum Widerstand der PI-

Reglerrückführung grösser als 3, insbesondere etwa 5 ist.

3. Schaltungsanordnung nach Anspruch 1 oder 2, dadurch gekennzeichnet, dass zur Erzeugung annähernd trapezförmiger Wechselspannungen an den Wechselspannungsausgängen (1, 2, 3) den Steuersätzen (7, 8, 9) für die Ventile der Teilumrichter (4, 5, 6) sinusförmige Steuerspannungen ($U_{St1}$, $U_{St2}$, $U_{St3}$) zugeführt sind und dass die Steuersätze (7, 8, 9) einen linear proportionalen Zusammenhang ($\alpha = k \cdot U_{St}$) zwischen Steuerwinkel ($\alpha$) und Steuerspannung ($U_{St}$) aufweisen.

## Claims

1. Circuit arrangement with a static frequency converter for feeding an m-phase load, wherein the static frequency converter comprises m partial converters (4, 5, 6) with alternating voltage outputs (1, 2, 3), wherein a respective output of each partial static frequency converter is fed to a common converter star point (11) which is not connected directly to the load, wherein the output current is impressed on each partial converter by its own current regulator (13, 14, 15) with an I portion, and an additional signal is superimposed on each current regulator along with the difference between the desired and actual value of the partial converter output current, characterised in that the additional signal of each current regulator (13, 14, 15) is tapped at its output in each case by means of a resistance (23, 24, 25).

2. Circuit arrangement according to claim 1, characterised in that PI regulators (13, 14, 15) are used as current regulators and the ratio of the resistance to the resistance of the PI regulator feedback is greater than 3, and is approximately 5 in particular.

3. Circuit arrangement according to claim 1 or 2, characterised in that to produce approximately trapezoidal alternating voltages at the alternating voltage outputs (1, 2, 3), sine-shaped control voltages ($U_{St1}$, $U_{St2}$, $U_{St3}$) are fed to the control units (7, 8, 9) for the valves of the partial converters (4, 5, 6), and in that control units (7, 8, 9) have a linearly proportional relationship ($\alpha = k \cdot U_{St}$) between the control angle ($\alpha$) and the control voltage ($U_{St}$).

## Revendications

1. Montage comportant un convertisseur pour l'alimentation d'une charge à m-phases, le convertisseurs étant constitué par m convertisseurs partiels (4, 5, 6) comportant des sorties (1, 2, 3) de tensions alternatives, une sortie de chaque convertisseur partiel étant reliée à un point neutre (11) commun aux convertisseurs, mais non relié directement à la charge, alors que pour chaque convertisseur on superpose au courant de sortie, par un régulateur de courant (13, 14, 15) qui lui est propre, une composante intégrale et qu'on applique à chaque régulateur de courant, en plus de la différence entre la valeur de consigne et la valeur instantanée du courant de sortie du convertisseur partiel, un signal supplémentaire, caractérisé par le fait que le signal supplémentaire de chaque régulateur de courant (13, 14, 15) est prélevé respectivement par l'intermédiaire d'une résistance (23, 24, 25), au niveau de sa sortie.

2. Montage selon la revendication 1, caractérisé par le fait que l'on utilise, comme régulateurs de courant des régulateurs proportionnels et intégrals (13, 14, 15) et, que le rapport entre la résistance et la résistance de la réaction par dérivation du régulateur proportionnel et intégral, est supérieur à 3, étant en particulier égal à environ 5.

3. Montage selon la revendication 1 ou 2, caractérisé par le fait que pour produire des tensions alternatives de forme à peu près trapézoïdale au niveau des sorties des tensions alternatives (1, 2, 3), on applique aux dispositifs de commande (7, 8, 9) pour les soupapes des convertisseurs partiels (4, 5, 6) des tensions sinusoïdales de commande ($U_{St1}$, $U_{St2}$, $U_{St3}$), et que les dispositifs de commande (7, 8, 9) présentent une relation proportionnelle et linéaire $\alpha = k \cdot U_{St}$ entre l'angle de commande ($\alpha$) et la tension de commande ($U_{St}$).

$$V = R2/R1$$

$$R3 = \infty$$

$$Tn = R2 \cdot C$$

$$V_E = R3/R1$$

$$R3 < \infty$$

$$V = R2/R1$$

$$V_0 = \frac{R2 \cdot R3}{R1\,(R2+R3)} = \frac{V_E \cdot V}{V_E + V}$$

$$Tn = R2 \cdot C$$

$$Tn' = Tn\,\frac{V}{V_0}$$

FIG 1

FIG 2